# EUROPEAN PATENT SPECIFICATION

(11) **EP 2 304 985 B1**
(45) Date of publication and mention of the grant of the patent: **25.02.2015**
(21) Application number: 09779690.8
(22) Date of filing: 09.06.2009
(51) Int. Cl.: H04L 12/26

(54) **PROVIDING SUBSCRIBER IDENTITY FOR CELL TRAFFIC TRACE IN E-UTRAN**
BEREITSTELLUNG EINER TEILNEHMERIDENTIFIKATION FÜR CELL TRAFFIC TRACE IN E-UTRAN
FOURNITURE D UNE IDENTITÉ D'ABONNÉ POUR UN SUIVI DE TRAFIC DE CELLULE DANS UN E-UTRAN

(30) Priority: 16.06.2008 US 129284 P
(43) Date of publication of application: 06.04.2011
(73) Proprietor: Nokia Solutions and Networks Oy, 02610 Espoo (FI)
(72) Inventor: BODOG, Gyula, H-1046 Budapest (HU)
(74) Representative: Borgström, Markus
(86) International application number: PCT/EP2009/057110
(87) International publication number: WO 2010/003750

(56) References cited:
- EP-A- 1 954 079
- WO-A-99/65261
- WO-A-02/082729
- US-A1- 2007 226 701
- "Digital cellular telecommunications system (Phase 2+); Universal Mobile Telecommunications System (UMTS); Telecommunication management; Subscriber and equipment trace; Trace control and configuration management (3GPP TS 32.422 version 7.2.0 Release 7); ETSI TS 132 422" ETSI STANDARDS, LIS, SOPHIA ANTIPOLIS CEDEX, FRANCE, vol. 3-SA5, no. V7.2.0, 1 June 2007 (2007-06-01), XP014038357 ISSN: 0000-0001
- NSN: "S5-080722 Adding EPC and E-UTRAN specific trace control and configuration" 3GPP DRAFT; S5-080880_REPORT ON TRACE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Chengdu, China; 20080425, 25 April 2008 (2008-04-25), XP050307440 [retrieved on 2008-04-25]

## Description

### BACKGROUND:

### Field:

Some embodiments of the invention relate to communications networks and particularly to wireless communications networks, such as the Universal Mobile Telecommunications System (UMTS) Terrestrial Radio Access Network (UTRAN) Long Term Evolution (LTE) and Evolved UTRAN (E-UTRAN). More specifically, certain embodiments of the invention are directed to methods, apparatuses and systems related to a cell traffic trace in E-UTRAN.

### Description of the Related Art:

A Universal Mobile Telecommunications System (UMTS) network comprises three interacting domains: Core Network (CN), UMTS Terrestrial Radio Access Network (UTRAN) and User Equipment (UE). A main function of the core network is to provide switching, routing and transit for user traffic. The core network may also contain the databases and network management functions.

UMTS Terrestrial Radio Access Network (UTRAN) includes base stations, or Node-Bs (NBs), and radio network controllers (RNC). UTRAN allows for connectivity between the user equipment (UE) and the core network. The RNC provides control functionalities for one or more Node Bs. The RNC and its corresponding Node Bs (NBs) are called the Radio Network Subsystem (RNS).

Long Term Evolution (LTE) refers to improvements of the UMTS through improved efficiency and services, lower costs, and use of new spectrum opportunities. In particular, LTE is a 3GPP standard that provides for an uplink speed of up to 50 megabits per second (Mbps) and a downlink speed of up to 100 Mbps. As mentioned above, LTE is also expected to improve spectral efficiency in 3G networks, allowing carriers to provide more data and voice services over a given bandwidth. Therefore, LTE is designed to fulfill future needs for high-speed data and media transport in addition to high-capacity voice support.

WO 02/082729 discloses tracing a session or call in IMS networking environment.

### SUMMARY

According to an aspect, there is provided an apparatus, comprising: a receiver configured to receive from at least one network element associated with a cell a trace notification for a cell traffic trace of that cell comprising a trace recording session reference of a call being traced in that the cell traffic trace, wherein the identify of a user equipment associated with the traced call is unknown to the at least one network element; a determiner configured to determine, upon receiving the trace notification, an identity of a user equipment associated with the call being traced in the that cell traffic trace; and a transmitter configured to send at least one of the trace notification and a trace log to a trace collection entity; wherein the trace notification and the trace log comprise a trace reference, the trace recording session reference, and the identity of the user equipment.

According to another aspect, there is provided a method, comprising: deceiving from at least one network element associated with a cell a trace notification for a cell traffic trace of that cell comprising a trace recording session reference of a call being traced in the that cell traffic trace, wherein the identity of a user equipment associated with the traced call is unknown to the at least one network element: determining, upon receiving the trace notification, an identity of a user equipment associated with the call being traced in the that cell traffic trace; and sending at least one of the trace notification and a trace log to a trace collection entity; wherein the trace notification and the trace log comprise a trace reference, the trace recording session reference, and the identity of the user equipment.

One embodiment is directed to an apparatus including a receiver configured to receive a traffic trace activation message. The apparatus may further comprise a processor configured to start a trace recording session and to simultaneously generate an identifier for the trace recording session. The apparatus may also include a transmitter configured to send a notification of the trace recording session to a core network node.

In yet another aspect, there is provided a computer program, embodied on a computer readable medium, the computer program configured to control a processor to perform operations comprising: receiving from at least one network element associated with a cell a trace notification for a cell traffic trace of that cell comprising a trace recording session reference of a call being traced in that cell traffic trace, wherein the identity of a user equipment associated with the traced call is unknown to the at least one network element: determining, upon receiving the trace notification, an identity of a user equipment associated with the call being traced in that cell traffic trace; and sending at least one of the trace notification and a trace log to a trace collection entity: wherein the trace notification and the trance log comprise a trace reference, the trace recording session reference, and the identity of the user equipment.

Another embodiment is directed to a method including receiving a traffic trace activation message. The method may further include starting a trace recording session and simultaneously generating an identifier for the trace recording session, and sending a notification of the trace recording session to a core network node.

According to another embodiment, a computer program embodied on a computer readable medium is provided. The computer program may be configured to control a processor to perform operations including receiving a traffic trace activation message, starting a trace recording session and simultaneously generating an identifier for the trace recording session, and sending a notification of the trace recording session to a core network node.

One embodiment is directed to an apparatus including a receiver configured to receive a trace notification including a trace recording session reference of a call. The apparatus may further include a determiner configured to determiner an identity of a user equipment associated with the call, and a transmitter configured to send at least one of the trace notification and a trace log to a trace collection entity.

Another embodiment is directed to a method including receiving a trace notification comprising a trace recording session reference of a call. The method may further include determining an identity of a user equipment associated with the call, and sending at least one of the trace notification and a trace log to a trace collection entity.

According to another embodiment, a computer program embodied on a computer readable medium is provided. The computer program may be configured to control a processor to perform operations including receiving a trace notification including a trace recording session reference of a call, determining an identity of a user equipment associated with the call, and sending at least one of the trace notification and a trace log to a trace collection entity.

One embodiment is directed to an apparatus including a receiver configured to receive a first trace record message including first trace record information, and to receive a second trace record message including second trace record information. The apparatus may further includes a combining unit configured to combine the first and second trace record information.

Another embodiment is directed to a method including receiving a first trace record message comprising first trace record information, and receiving a second trace record message comprising second trace record information. The method may further include combining the first and second trace record information.

According to another embodiment, a computer program embodied on a computer readable medium is provided. The computer program configured to control a processor to perform operations including receiving a first trace record message including first trace record information, receiving a second trace record message including second trace record information, and combining the first and second trace record information.

### BRIEF DESCRIPTION OF THE DRAWINGS:

For proper understanding of the invention, reference should be made to the accompanying drawings, wherein:
Fig. 1 illustrates a system according to one embodiment of the invention;
Fig. 2 illustrates a signaling diagram according to an embodiment of the invention;
Fig. 3 illustrates a system and apparatuses according to an example of the invention;
Fig. 4 illustrates a method according to an embodiment of the invention;
Fig. 5 illustrates a method according to an alternative embodiment of the invention;
Fig. 6 illustrates a method according to an alternative embodiment of the invention; and
Fig. 7 illustrates a method according to an alternative embodiment of the invention.

### DETAILED DESCRIPTION:

System Architecture Evolution ("SAE") is the core network architecture of the 3rd Generation Partnership Project's (3GPP's) future LTE wireless communication standard. SAE is the evolution of the General Packet Radio Service (GPRS) Core Network with some improvements, such as a simplified architecture and an all IP Network (AIPN). SAE also provides support for higher throughput and lower latency radio access networks (RANs), and support for multiple, heterogeneous RANs including legacy systems like GPRS, and non-3GPP systems such as worldwide interoperability for microwave access (WiMAX) networks. A further improvement provided by SAE is mobility between heterogeneous RANs, including legacy systems and non-3GPP systems.

The main component of the SAE architecture is the Evolved Packet Core (EPC), also known as SAE Core. The EPC may serve as the equivalent of GPRS networks via the Mobility Management Entity (MME), Serving Gateway (S-GW) and PDN Gateway (P-GW) subcomponents. The MME is a control plane entity that manages the attachment to the network, the authentication of the User Equipment (UE), and interfaces the evolved radio access network (E-RAN) for the creation of relevant radio bearers. The S-GW is a user plane entity that handles uplink and downlink packet forwarding between the P-GW and the radio environment (e.g. E-RAN). The S-GW is located in the network where the UE is camping. The P-GW is a user plane entity that may act as an anchor point even when the UE is moving (during a session, it is not necessary to change the P-GW, regardless of the changing location of UE). It is, thus, the focus anchor point that manages mobility between legacy (2G/3G) 3GPP radio and E-RAN (LTE) radio and non-3GPP (e.g. WiMAX, 3GPP2) radio environments. P-GW generally supports Mobile IP (MIP) and Home Agent (HA) functionality.

The E-UTRAN includes evolved NBs (eNBs) which are interconnected with each other by the X2 interface. Each eNB is connected to the EPC network by the S1 interface. On the user plane the S1 interface terminates the S-GW, on the signaling plane the S1 interface terminates the MME. The eNBs may be terminating points for the control and user planes towards the UEs in the E-UTRAN.

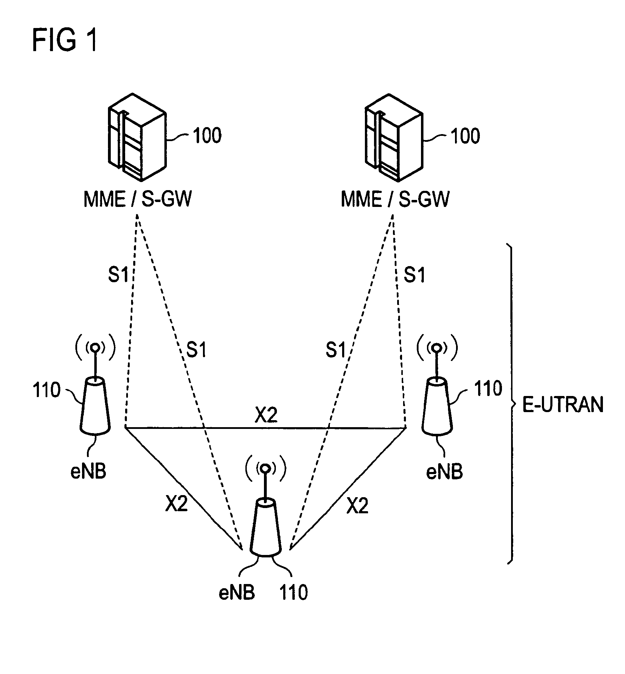

Fig. 1 illustrates an example of an E-UTRAN according to an embodiment of the invention. As illustrated in Fig. 1, eNBs 110 may be in communication with MME/S-GW 100 via the S1 interface. While the eNBs 110 can be connected to each other via the X2 interface.

E-UTRAN includes a functionality that is referred to as cell traffic trace. The difference between cell traffic trace and subscriber and equipment trace is that, in a cell traffic trace, the object of the trace is a particular cell of the cellular radio network. During a cell traffic trace all calls and events that are carried out in that particular cell are recorded. When the cell traffic trace functionality was developed, there was no requirement or solution for providing a subscriber identity or an equipment identity in the cell traffic trace records. However, the provision of subscriber and/or equipment identities for the cell traffic trace functionality would make troubleshooting significantly easier. For example, when a subscriber indicates that a specific service is not working in a certain area, the provision of the identity of the subscriber, will make it easier and faster for the network operator to perform a cell traffic trace.

However, in the E-UTRAN, the subscriber and equipment identities may not be provided for security reasons. As a result, a network element, such as an eNB, cannot provide the subscriber identity to the trace records that it produces. The core network may know the identities of the subscribers or equipment, but in the case of a cell traffic trace, the core network may not be made aware of when and which cells are set under a trace. Embodiments of the invention provide solutions for facilitating and improving the speed and efficiency of a traffic cell trace.

One solution is to perform a subscriber and equipment trace for the specific international mobile subscriber identity (IMSI) number of the subscriber experiencing a degradation in service. This may require retrieving the IMSI number of the subscriber from the home location register (HLR)/home subscriber server (HSS). Another solution is to start tracing using the mobile subscriber integrated services digital network number (MSISDN). However, this does not allow for the possibility of limiting the trace recording only to a certain cell.

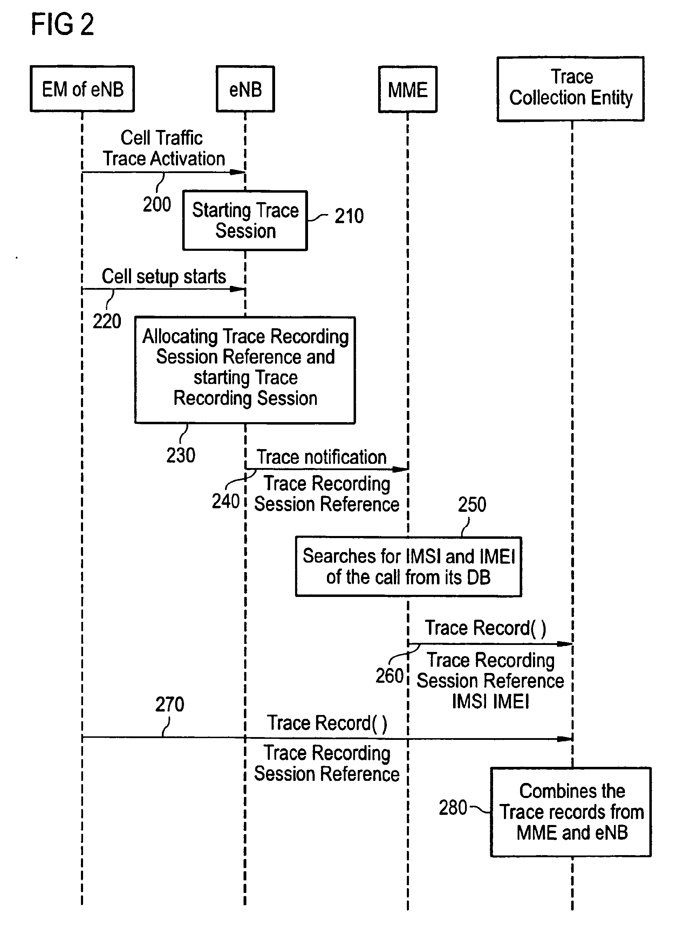

In one embodiment, as illustrated in Fig. 2, when a network operator activates a cell traffic trace 200, which may be initiated from the Element Manager (EM) or (Domain Manager (DM)) of the radio network, a network element, which in this example is an eNB, starts a trace session 210. Whenever a call or some activity is started on the cell that is being traced (call setup starts 220), the eNB starts the recording and, at the same time, generates an identity (ID) for that recording session 230. The ID may serve as a trace recording session reference. The ID may also be unique at least within an eNB or trace recording session, and may contain some identification of the eNB so other network entities or components, such as the MME, are able to separate the different trace recording session references coming from different eNB. The identification of the eNB may include the distinguished name of the eNB. In some embodiments, the trace recording session may be started after appropriate start trigger events are detected.

In certain embodiments, each network element (or eNB) can generate its own trace recording session reference so that independent trace recording sessions are generated. Also, in some embodiments, each network element may start the trace recording session based upon trace control and configuration parameters received by the network element in a trace session activation. In some embodiments, it is optional for the network element to start a trace recording session if there are insufficient resources available within the network element.

In one embodiment, after starting the recording and generating of an ID, the eNB may send a notification 240 to the Core Network or MME via an S1 connection, that has been setup for the given call. This notification may include the ID and/or trace recording session reference allocated for the call, the trace reference, and/or the trace collection entity address. When the MME receives this notification, the MME determines the IMSI, MSISDN and/or international mobile equipment identity (IMEI(SV)) number for the given call 250 and sends a notification or a trace log to a trace collection entity 260. In one embodiment, upon receipt of notification 240, the MME may look up the IMSI, MSISDN and/or international mobile equipment identity (IMEI) number from its database and send the IMSI, IMEI(SV), and/or MSISDN, together with the trace recording session reference and trace reference, to the trace collection entity.

The trace collection entity therefore contains the IMSI, MSISDN and IMEI number for the given call and the trace recording session reference that was received from the eNB via the S1 connection. In another embodiment, the trace collection entity may receive the trace recording session reference directly form the eNB 270. The trace collection entity may then combine the trace records received from the MME and eNB 280, respectively, thereby facilitating the performance of the cell traffic trace.

In the case of a trace other than a cell traffic trace, the correlation of trace data may be done with a trace reference and IMSI / IMEI / IMEISV / Private ID. In certain embodiments, the trace recording session will begin when the IMSI (for a subscriber trace), the IMEI/IMEISV (for a UE trace), or Private ID (for IMS) is made available in the network element. The IMSI, IMEI/IMEISV, or Private ID are made available to the network element as soon as possible in order to be able to trace the early phases of the call.

In some embodiments, the core network node that triggers a trace recording session may provide a trace log including the trace reference, trace recording session reference, and the identity of the UE (i.e. IMSI, or IMEI(SV)) to the trace collection entity. In other embodiments, the core network node may provide a notification including the trace reference, trace recording session reference and the identity of the UE to the trace collection entity.

According to one embodiment, in a cell traffic trace, the trace recording session may start upon the trace control and configuration parameters being received by the network elements in the trace session activation and the presence of call activity. Furthermore, in certain embodiments, the core network node that handles the traced session can be requested to provide a trace log and/or a notification as discussed above.

Although the embodiments outlined above utilize the IMSI, MSISDN, IMEI(SV), or Private ID as the subscriber identity, a person of ordinary skill in the art would understand that any other type of subscriber identification can be used instead. As such, any appropriate subscriber identification can be included in the trace record and/or provided to the trace collection entity.

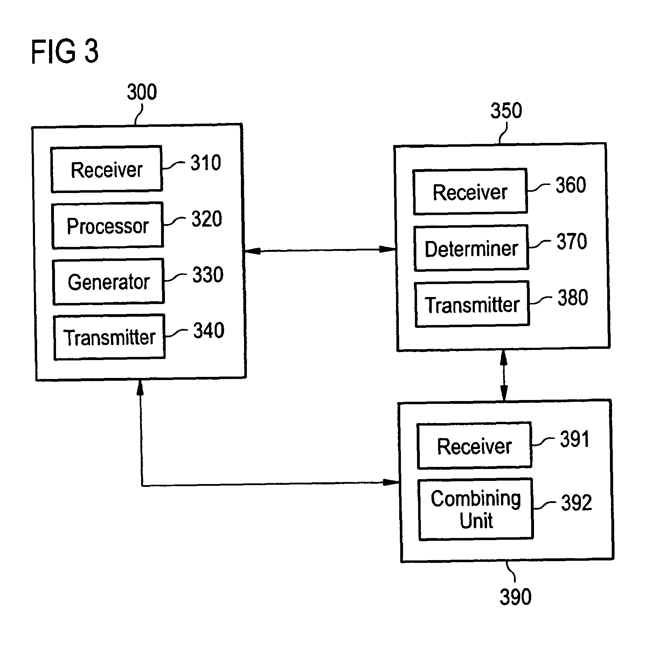

Fig. 3 illustrates a block diagram of a system, according to an embodiment of the present invention, including an eNB 300, MME 350, and trace collection entity 390. The eNB 300 comprises a receiver 310, processor 320, generator 330, and transmitter 340. The receiver 310 is configured to receive a cell traffic trace activation message. The processor 320 is configured to start a cell traffic trace session of a cell, start call set up, and start a trace recording session. The generator 330 is configured to generate, simultaneously or at the same time the trace recording session is started, a unique identifier for the trace recording session. The transmitter 340 is configured to then send a trace notification to the MME 350. The MME 350 includes a receiver 360 configured to receive the trace notification from the eNB, the trace notification may include a trace recording session reference. The MME 350 further includes a determiner 370 configured to determine the IMSI, MSISDN and IMEI for the call, and a transmitter 380 configured to send the trace recording session reference together with the IMSI, MSISDN and IMEI to the trace collection entity 390. The trace collection entity 390 comprises a receiver 391 configured to receive the trace recording session reference and/or the IMSI and IMEI for the call from MME 350. The trace collection entity further includes a combining unit 392 configured to combine trace recording session information received from the MME 350 and the eNB 300.

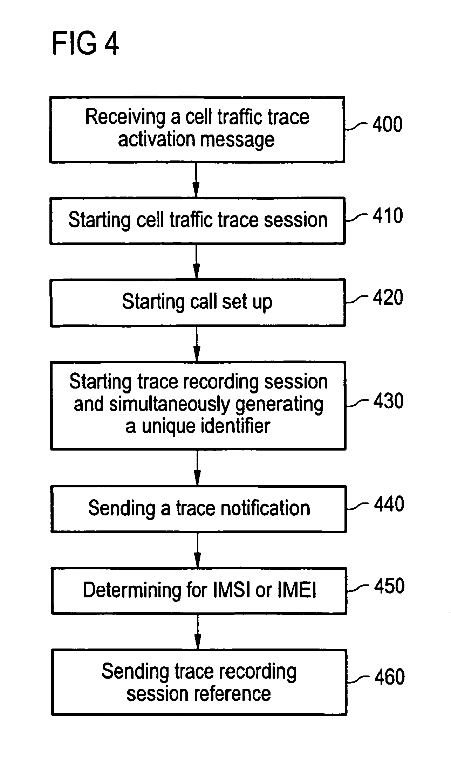

Fig. 4 illustrates an example of a method, according to an embodiment of the present invention. The method includes receiving a cell trace activation message 400, starting a cell traffic trace session for a cell 410, and starting call set up 420. The method may further include starting a trace recording session and simultaneously generating a unique identifier for the recording session 430. The method continues by sending a trace notification to a core network or MME 440. The trace notification may include a trace recording session reference which comprises the unique identifier for the recording session. The method further comprises determining the IMSI and/or IMEI for the call 450, and sending the trace recording session reference to a trace collection entity 460.

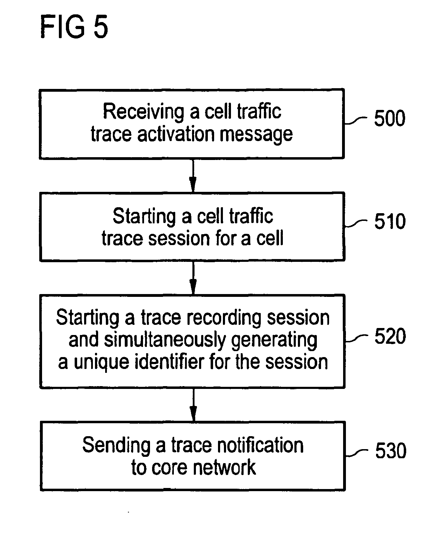

In another embodiment, a cell traffic trace method is provided as illustrated in Fig. 5. The method includes receiving a cell traffic trace activation message 500, and starting a cell traffic trace session for a cell 510. The method may further include starting a trace recording session and simultaneously generating a unique identifier for the recording session 520. A trace notification may then be sent to the core network or MME 530. The trace notification may include the unique identifier for the recording session.

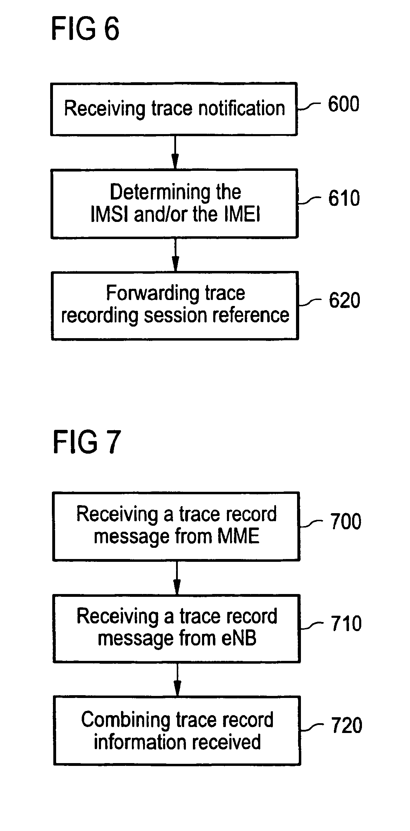

Fig. 6 illustrates a method according to another embodiment of the present invention. The method includes receiving a trace notification from an eNB 600. The trace notification may include a trace recording session reference of a call and/or an identifier (ID) for the call. The method further includes determining the IMSI and/or IMEI for the call 610, and sending the trace recording session reference, ID for the call, and/or the IMSI and IMEI for the call to a trace collection entity 620.

Figure 7 illustrates a flow chart of a method according to another aspect of the present invention. The method includes receiving a trace record message from the MME 700. The trace record message may include the trace recording session reference, ID for the call, and/or the IMSI and IMEI for the call. The method further includes receiving a trace record message from the eNB 710, and combining the trace record information received from the MME and eNB 720. In one embodiment, the trace record information received from the MME and eNB is combined when both the information received from the MME and eNB belong to the same trace recording session and/or have the same trace recording session reference.

In view of the above, embodiments of the invention may provide methods, apparatuses, systems and computer programs for facilitating a cell trace functionality in E-UTRAN. Thus, in one aspect of the invention, a system providing a cell traffic trace functionality is provided. The system includes an e-node B, mobility management entity, and a trace collection entity. The system may also include an element manager (domain manager) for the e-node B. The e-node B includes a receiver, processor, generator, and transmitter. The receiver is configured to receive a cell traffic trace activation message. The processor is configured to start a cell traffic trace session of a cell, start call set up, and start a trace recording session. The generator is configured to generate, at the same time the trace recording session is started, a unique identifier for the trace recording session. The transmitter is configured to then send a trace notification to the mobility management entity. The mobility management entity includes a receiver configured to receive the trace notification from the e-node B, the trace notification may include a trace recording session reference. The mobility management entity further includes a determiner configured to determine the IMSI, MSISDN and IMEI for the call, and a transmitter configured to send the trace recording session reference and the IMSI, MSISDN, IMEI numbers to the trace collection entity. The trace collection entity includes a receiver configured to receive the trace recording session reference and/or the IMSI, MSISDN and IMEI for the call from mobility management entity. The trace collection entity further includes a combining unit configured to combine trace recording session information received from the mobility management entity and the e-node B.

In another embodiment, a method of providing a cell traffic trace functionality is provided. The method includes receiving a cell trace activation message, starting a cell traffic trace session for a cell, and starting call set up. The method may further include starting a trace recording session and simultaneously generating a unique identifier for the recording session. The method further includes sending a trace notification to a core network or mobility management entity. The trace notification may include a trace recording session reference which comprises the unique identifier for the recording session. The method may also include determining the IMSI and/or IMEI for the call, and sending the trace recording session reference to a trace collection entity.

Another embodiment of the invention includes an apparatus which may contribute to the cell traffic trace functionality. The apparatus includes a receiver configured to receive a cell traffic trace activation message, a processor configured to start a cell traffic trace session for a call, a processor configured to start a trace recording session and to simultaneously generate a unique identifier for the trace recording session, and a transmitter configured to send a trace notification to a core network node.

Another aspect of the invention provides a method including receiving a cell traffic trace activation message, starting a cell traffic trace session for a call, starting a trace recording session and simultaneously generating a unique identifier for the trace recording session, and sending a trace notification to a core network node.

In one embodiment, an apparatus may include a receiver configured to receive a trace notification, the trace notification including a trace recording session reference of a call. The apparatus may further include a determiner configured to determine the IMSI, MSISDN and/or IMEI for the call, and a transmitter configured to forward the trace recording session reference and/or the IMSI, MSISDN and IMEI to a network entity.

In another example, the invention may include a method comprising receiving a trace notification, the trace notification including a trace recording session reference of a call. The method may further include determining the IMSI and/or IMEI for the call, and forwarding the trace recording session reference and/or the IMSI and IMEI to a network entity.

According to another aspect of the invention, an apparatus may include a receiver configured to receive a first trace record message comprising first trace record information. The receiver may also be configured to receive a second trace record message comprising second trace record information. The apparatus may further include a combining unit configured to combine the first and second trace record information.

In another example, the invention may include a method comprising receiving a first trace record message comprising first trace record information, receiving a second trace record message comprising second trace record information, and combining the first and second trace record information.

Embodiments of the invention may also include computer programs embodied on a computer or machine readable medium. The computer programs may be configured to control a processor to perform a method. In one example, a computer program embodied on a machine-readable medium is configured to control a processor to perform a method including receiving a cell trace activation message, starting a cell traffic trace session for a cell, and starting call set up. The method may further include starting a trace recording session and simultaneously generating a unique identifier for the recording session. The method further includes sending a trace notification to a core network or mobility management entity. The trace notification may include a trace recording session reference which comprises the unique identifier for the recording session. The method may also include determining the IMSI, MSISDN and/or IMEI for the call, and sending the trace recording session reference to a trace collection entity.

According to another embodiment, a computer program embodied on a machine-readable medium is configured to control a processor to perform a method including receiving a cell traffic trace activation message, starting a cell traffic trace session for a call, starting a trace recording session and simultaneously generating a unique identifier for the trace recording session, and sending a trace notification to a core network node.

In another aspect of the invention, a computer program embodied on a machine-readable medium is configured to control a processor to perform a method including receiving a trace notification, the trace notification including a trace recording session reference of a call. The method may further include determining the IMSI and/or IMEI for the call, and forwarding the trace recording session reference and/or the IMSI and IMEI to a network entity.

According to another embodiment, a computer program embodied on a machine-readable medium is configured to control a processor to perform a method including receiving a first trace record message comprising first trace record information, receiving a second trace record message comprising second trace record information, and combining the first and second trace record information.

As an example, a computer readable medium may be at least partially embodied by a transmission line, a compact disk, digital-video disk, a magnetic tape, a Bernoulli drive, a magnetic disk, holographic disk or tape, a punch card, flash memory, magnetoresistive memory, integrated circuits, or other digital processing apparatus memory device.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention.

## Claims

1. An apparatus, comprising:
a receiver configured to receive from at least one network element associated with a cell a trace notification for a cell traffic trace of that cell comprising a trace recording session reference of a call being traced in that cell traffic trace, wherein the identity of a user equipment associated with the traced call is unknown to the at least one network element;
a determiner configured to determine, upon receiving the trace notification, an identity of a user equipment associated with the call being traced in that cell traffic trace; and
a transmitter configured to send at least one of the trace notification and a trace log to a trace collection entity;
wherein the trace notification and the trace log comprise a trace reference, the trace recording session reference, and the identity of the user equipment.

2. The apparatus of claim 1, wherein the determiner is further configured to lookup the identity of the user equipment from a database.

3. The apparatus of claim 1 or 2, wherein the identity of the user equipment comprises at least one of an international mobile subscriber identity (IMSI), an international mobile equipment identity (IMEI), an international mobile equipment identity plus software version (IMEISV), and a mobile subscriber integrated services digital network number (MSISDN).

4. A method, comprising:
receiving from at least one network element associated with a cell a trace notification for a cell traffic trace of that cell comprising a trace recording session reference of a call being traced in that cell traffic trace, wherein the identity of a user equipment associated with the traced call is unknown to the at least one network element;
determining, upon receiving the trace notification, an identity of a user equipment associated with the call being traced in that cell traffic trace; and
sending at least one of the trace notification and a trace log to a trace collection entity;
wherein the trace notification and the trace log comprise a trace reference, the trace recording session reference, and the identity of the user equipment.

5. The method of claim 4, wherein the determining comprises determining the identity of the user equipment from a database.

6. The method of claim 4 or 5, wherein the identity of the user equipment comprises at least one of an international mobile subscriber identity (IMSI), an international mobile equipment identity (IMEI), an international mobile equipment identity plus software version (IMEISV), and a mobile subscriber integrated services digital network number (MSISDN).

7. A computer program, embodied on a computer readable medium, the computer program configured to control a processor to perform operations comprising:
receiving from at least one network element associated with a cell a trace notification for a cell traffic trace of that cell comprising a trace recording session reference of a call being traced in that cell traffic trace, wherein the identity of a user equipment associated with the traced call is unknown to the at least one network element;
determining, upon receiving the trace notification, an identity of a user equipment associated with the call being traced in that cell traffic trace; and
sending at least one of the trace notification and a trace log to a trace collection entity;
wherein the trace notification and the trace log comprise a trace reference, the trace recording session reference, and the identity of the user equipment.

## Patentansprüche

1. Einrichtung, umfassend:
einen Empfänger eingerichtet zum Empfangen, von wenigstens einem mit einer Zelle verbundenen Netzelement, einer Spurbenachrichtigung für eine Zellenverkehrsspur dieser Zelle, umfassend einen Spuraufzeichungssitzungshinweis eines in dieser Zellenverkehrsspur verfolgten Rufs, wobei die Identität eines mit dem verfolgten Ruf verbundenen Benutzergeräts dem wenigstens einen Netzelement unbekannt ist;
einen Bestimmer eingerichtet zum Bestimmen, bei Empfangen der Spurbenachrichtung, einer Identität eines mit dem in dieser Zellenverkehrsspur verfolgten Ruf verbundenen Benutzergeräts; und
einen Sender eingerichtet zum Senden wenigstens eines der Spurbenachrichtigung und eines Spurprotokolls zu einer Spursammlungsinstanz;
wobei die Spurbenachrichtigung und das Spurprotokoll einen Spurhinweis, den Spuraufzeichnungssitzungshinweis und die Identität des Benutzergeräts umfassen.

2. Einrichtung nach Anspruch 1, wobei der Bestimmer weiterhin eingerichtet ist zum Nachschlagen der Identität des Benutzergeräts in einer Datenbank.

3. Einrichtung nach Anspruch 1 oder 2, wobei die Identität des Benutzergeräts wenigstens eines einer internationalen Mobilteilnehmeridentität (IMSI - International Mobile Subscriber Identity), einer internationalen Mobilgeräteidentität (IMEI - International Mobile Equipment Identity), einer internationalen Mobilgeräteidentität plus Software-Version (IMEISV - International Mobile Equipment Identity Plus Software Version) und eine Mobilteilnehmer-ISDN (Mobile Subscriber Integrated Services Digital Network Number) umfasst.

4. Verfahren, umfassend:
Empfangen, von wenigstens einem mit einer Zelle verbundenen Netzelement, einer Spurbenachrichtigung für eine Zellenverkehrsspur dieser Zelle umfassend einen Spuraufzeichnungssitzungshinweis eines in dieser Zellenverkehrsspur verfolgten Rufs, wobei die Identität eines mit dem verfolgten Ruf verbundenen Benutzergeräts dem wenigstens einen Netzelement unbekannt ist;
Bestimmen, bei Empfangen der Spurbenachrichtigung, einer Identität eines mit dem in dieser Zellenverkehrsspur verfolgten Ruf verbundenen Benutzergeräts; und
Senden wenigstens eines der Spurbenachrichtigung und eines Spurprotokolls zu einer Spursammlungsinstanz;
wobei die Spurbenachrichtigung und das Spurprotokoll einen Spurhinweis, den Spuraufzeichnungssitzungshinweis und die Identität des Benutzergeräts umfassen.

5. Verfahren nach Anspruch 4, wobei das Bestimmen Bestimmen der Identität des Benutzergeräts aus einer Datenbank umfasst.

6. Verfahren nach Anspruch 4 oder 5, wobei die Identität des Benutzergeräts wenigstens eines einer internationalen Mobilteilnehmeridentität (IMSI - International Mobile Subscriber Identity), einer internationalen Mobilgeräteidentität (IMEI - International Mobile Equipment Identity), einer internationalen Mobilgeräteidentität plus Software-Version (IMEISV - International Mobile Equipment Identity Plus Software Version) und einer Mobilteilnehmer-ISDN (MSISDN - Mobile Subscriber Integrated Services Digital Network Number) umfasst.

7. Auf einem computerlesbaren Medium ausgebildetes Computerprogramm, wobei das Computerprogramm eingerichtet ist zum Steuern eines Prozessors zum Durchführen von Operationen umfassend:
Empfangen, von wenigstens einem mit einer Zelle verbundenen Netzelement, einer Spurbenachrichtigung für eine Zellenverkehrsspur dieser Zelle, umfassend einen Spuraufzeichnungssitzungshinweis eines in dieser Zellenverkehrsspur verfolgten Rufs, wobei die Identität eines mit dem verfolgten Ruf verbundenen Benutzergeräts dem wenigstens einen Netzelement unbekannt ist;
Bestimmen, bei Empfangen der Spurbenachrichtigung, einer Identität eines mit dem in dieser Zellenverkehrsspur verfolgten Ruf verbundenen Benutzergeräts; und
Senden wenigstens eines der Spurbenachrichtigung und eines Spurprotokolls zu einer Spursammlungsinstanz;
wobei die Spurbenachrichtigung und das Spurprotokoll einen Spurhinweis, den Spuraufzeichnungssitzungshinweis und die Identität des Benutzergeräts umfassen.

## Revendications

1. Un appareil comprenant :
un récepteur configuré de façon à recevoir à partir d'au moins un élément de réseau associé à une cellule une notification de suivi pour un suivi de trafic de cellule de cette cellule comprenant une référence de session d'enregistrement de suivi d'un appel qui est suivi dans ce suivi de trafic de cellule,
l'identité d'un équipement utilisateur associé à l'appel suivi étant inconnu du au moins un élément de réseau,
un dispositif de détermination configuré de façon à déterminer, lors de la réception de la notification de suivi,
une identité d'un équipement utilisateur associé à l'appel qui est suivi dans ce suivi de trafic de cellule, et
un émetteur configuré de façon à envoyer au moins un élément parmi la notification de suivi et un fichier journal de suivi à une entité de recueil de suivi,
la notification de suivi et le fichier journal de suivi comprenant une référence de suivi, la référence de session d'enregistrement de suivi et l'identité de l'équipement utilisateur.

2. L'appareil selon la revendication 1, dans lequel le dispositif de détermination est configuré en outre de façon à consulter l'identité de l'équipement utilisateur à partir d'une base de données.

3. L'appareil selon la revendication 1 ou 2, dans lequel l'identité de l'équipement utilisateur comprend au moins un élément parmi une identité internationale d'abonné mobile (IMSI), une identité internationale d'équipement mobile (IMEI), une identité internationale d'équipement mobile plus version logicielle (IMEISV) et un numéro de réseau numérique de services intégrés d'abonné mobile (MSISDN).

4. Un procédé, comprenant :
la réception à partir d'au moins un élément de réseau associé à une cellule d'une notification de suivi pour un suivi de trafic de cellule de cette cellule comprenant une référence de session d'enregistrement de suivi d'un appel qui est suivi dans ce suivi de trafic de cellule, l'identité d'un équipement utilisateur associé à l'appel suivi étant inconnu du au moins un élément de réseau,
la détermination, lors de la réception de la notification de suivi, d'une identité d'un équipement utilisateur associé à l'appel qui est suivi dans ce suivi de trafic de cellule, et
l'envoi d'au moins un élément parmi la notification de suivi et un fichier journal de suivi à une entité de recueil de suivi,
la notification de suivi et le fichier journal de suivi comprenant une référence de suivi, la référence de session d'enregistrement de suivi et l'identité de l'équipement utilisateur.

5. Le procédé selon la revendication 4, dans lequel la détermination comprend la détermination de l'identité de l'équipement utilisateur à partir d'une base de données.

6. Le procédé selon la revendication 4 ou 5, dans lequel l'identité de l'équipement utilisateur comprend au moins un élément parmi une identité internationale d'abonné mobile (IMSI), une identité internationale d'équipement mobile (IMEI), une identité internationale d'équipement mobile plus version logicielle (IMEISV) et un numéro de réseau numérique de services intégrés d'abonné mobile (MSISDN).

7. Un programme informatique incorporé sur un support lisible par ordinateur, le programme informatique étant configuré de façon à commander un processeur destiné à exécuter des opérations comprenant :
la réception à partir d'au moins un élément de réseau associé à une cellule d'une notification de suivi pour un suivi de trafic de cellule de cette cellule comprenant une référence de session d'enregistrement de suivi d'un appel qui est suivi dans ce suivi de trafic de cellule, l'identité d'un équipement utilisateur associé à l'appel suivi étant inconnu du au moins un élément de réseau,
la détermination, lors de la réception de la notification de suivi, d'une identité d'un équipement utilisateur associé à l'appel qui est suivi dans ce suivi de trafic de cellule, et
l'envoi d'au moins un élément parmi la notification de suivi et un fichier journal de suivi à une entité de recueil de suivi,
la notification de suivi et le fichier journal de suivi comprenant une référence de suivi, la référence de session d'enregistrement de suivi et l'identité de l'équipement utilisateur.
